# EUROPEAN PATENT SPECIFICATION

(11) **EP 2 148 549 B1**
(45) Date of publication and mention of the grant of the patent: **23.11.2011**
(21) Application number: 08160914.1
(22) Date of filing: 22.07.2008
(51) Int. Cl.: H04W 76/06

(54) **Dynamic S1 connections in wireless communication systems**
Dynamische S1-Verbindungen in drahtlosen Kommunikationssystemen
Connexions S1 dynamiques dans des systèmes de communication sans fil

(43) Date of publication of application: 27.01.2010
(73) Proprietor: Fujitsu Limited, Kawasaki-shi, Kanagawa 211-8588 (JP)
(72) Inventor: Li, Zhaojun, Guildford, Surrey GU3 2DJ (GB)
(74) Representative: Stebbing, Timothy Charles

(56) References cited:
- WO-A-2008/067248
- 3GPP: "Technical Specification Group Radio Access Network; Home(e)NodeB; Network aspects (Release 8)" 3GPP TR R3.020 V0.6.0, R3-081335, [Online] May 2008 (2008-05), pages 1-53, XP002511864 Retrieved from the Internet: URL:http://www.3gpp.org/ftp/tsg_ran/WG3_Iu /TSGR3_60/docs/> [retrieved on 2009-01-26]
- PANASONIC: "S1 connectivity for HeNB" 3GPP TSG-RAN WG3 #59BIS, R3-080781, [Online] 31 March 2008 (2008-03-31), - 3 April 2008 (2008-04-03) pages 1-2, XP002511865 Retrieved from the Internet: URL:http://www.3gpp.org/ftp/tsg_ran/WG3_Iu /TSGR3_59bis/docs/> [retrieved on 2009-01-26]

## Description

The present invention relates to wireless communication systems, more particularly but not exclusively to wireless communication systems adopting the use of a so-called Home eNodeB (HeNB) as part of the long-term evolution (LTE) of UMTS (also called 3G) cellular technology.

UMTS or 3G wireless communication systems are being deployed worldwide. Future development of UMTS systems is centred on the so-called evolved UMTS terrestrial radio access network (evolved UTRAN or eUTRAN), more commonly referred to by the project name LTE.

In LTE, the architecture of the wireless communication system evolves from one supporting both circuit-switched and packet-switched communications, to an all-IP, packet-switched system. The overall architecture of the eUTRAN and its core network becomes simplified, and they combine to form the so-called Evolved Packet System (EPS), also called System Architecture Evolution (SAE).

As in current UMTS systems, the basic architecture proposed for LTE consists of a radio access network (the eUTRAN) connecting users (or more precisely, user equipments, UEs) to access nodes acting as base stations, these access nodes in turn being linked to a core network. In eUTRAN terminology the access node is called an eNode B or eNB and is the sole type of node in the eUTRAN as such, thus simplifying the architecture and reducing the number of hops in comparison with earlier wireless communication systems. A separate radio network controller (RNC) as used in previously-proposed systems is no longer required, its functions being incorporated into the eNodeB. The eNBs connect to the core network which, in LTE, is referred to as the evolved packet core (EPC).

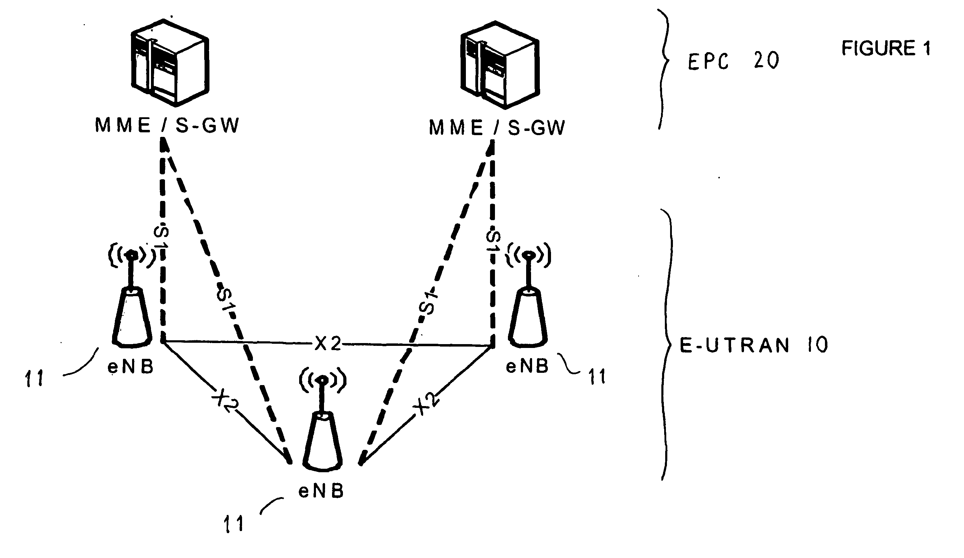

Figure 1 shows a simplified view of this architecture. Each eNB 11 is in communication with one or more UEs (not shown); such UEs are said to be "attached" to the eNB. The eNBs are linked to each other by means of the X2 interface. This may involve a wireless link, a wired link or some sort of virtual link. This allows the eNBs to coordinate their actions without involving the core network. The eNBs are also connected to entities of the core network (EPC 20) via another interface called S1. Such entities include a mobility management entity (MME) and a serving Gateway (S-GW, sometimes also called A-GW), which in Fig. 1 are indicated both together, though in practice they are at least logically distinct as explained below. The S1 interface supports a many-to-many relationship between the MMEs or S-GWs, and the eNBs. As indicated in Fig. 1, the E-UTRAN 10 comprises the eNBs 11, providing the E-UTRA user plane and control plane terminations towards the UEs; meanwhile, the higher level functions of MME and S-GW form part of the EPC 20.

To reduce implementation costs and avoid wasteful duplication of hardware, it is possible for service providers to each deploy their own EPC 20 whilst sharing the E-UTRAN 10 (i.e. the eNBs 11). In this scenario, each eNB 11 would connect a UE to the appropriate EPC based on some identifier of the service provider contained in a request from the UE.

Any wireless communication system involves both communications links for user data and communications links for signalling or control data. In LTE, these aspects of the system are strictly separate. In other words the "user plane" and "control plane" (formed of layers PDCP/RLC/MAC/PHY for user data and RRC for signalling, respectively: see below) are split and handled by distinct entities in the system, allowing one plane to be reconfigured or upgraded without affecting the other. The user plane is also sometimes called the bearer plane, and the control plane may also be referred to as the signalling plane.

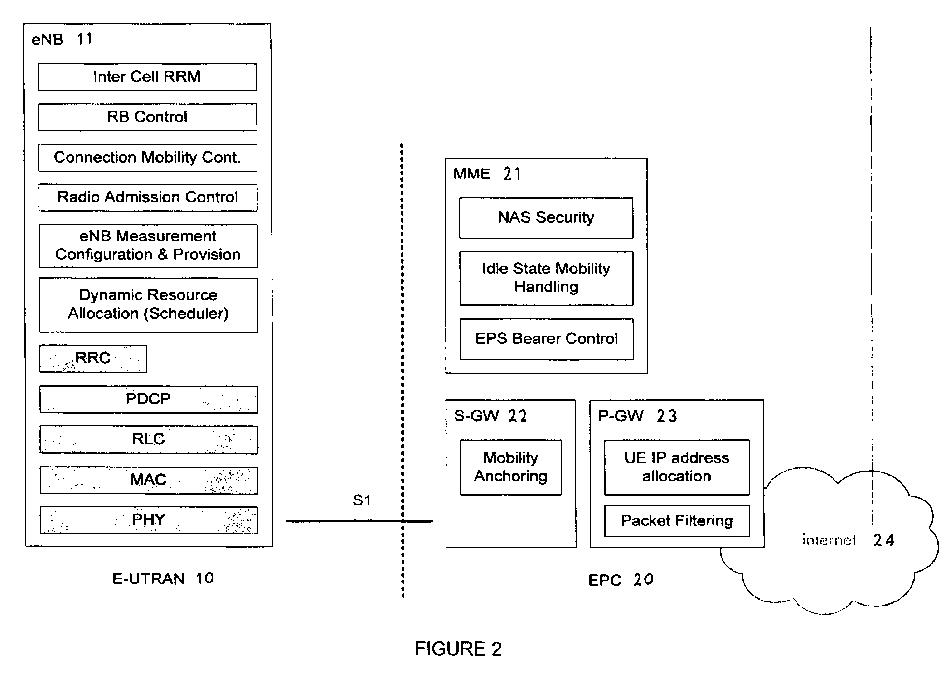

In the E-UTRAN, the user plane comprises a packet data convergence protocol (PDCP), radio link control (RLC), medium access control (MAC) and the physical layer (PHY), whilst the control plane performs radio resource control (RRC). The above division of functions is depicted in Figure 2, showing the major division of functions between an eNB 11, MME 21 and S-GW 22 in an LTE system.

RRC, which is handled by the eNB 11, involves paging UEs, broadcasting system information, managing UE measurement reporting, and making handover decisions based on the measurement reports. In general, "handover" refers to any change in a UE's serving cell, whether or not involving a change in eNB (it is possible for one eNB to provide multiple cells depending on the antenna configuration). In this specification, however, "handover" usually refers to the process of a UE ceasing to be attached to a first, "source" eNB and instead becoming attached to a second "target" eNB, thus transferring responsibility for the UE from the source to the target eNB (usually as a result of the UE having moved closer to the target eNB). The main function of the MME, as its name suggests, is to manage mobility of UEs. It is a signalling-only entity; in other words, user data packets do not pass through the MME. The MME 21 is also responsible for controlling security (including authenticating users), and for EPS bearer control (see below).

Meanwhile, the S-GW 22 is employed in the user plane and is responsible for packet forwarding of user data on the downlink to the UE and on the uplink. The S-GW 22 provides a "mobility anchor" for the user plane during handovers of a UE from one eNB 11 to another. It also manages and stores UE "contexts" which are the details of active connections with UEs including so-called bearers (see below).

Several of each type of entity may be deployed in a practical system. Whilst the MME 21 and S-GW 22 have distinct functions as already mentioned, they also communicate with each other via a further newly-defined interface, S11. The separation of MME and S-GW allows the former to be optimised for signalling whilst the latter can be optimised for high-bandwidth packet processing. It also allows the MMEs 21 to be scaled based on the number of sessions (active users) with the S-GWs 22 independently scaled to the volume of traffic.

In addition, other entities will normally be provided in the EPC 20, notably a PDN Gateway or P-GW 23 as shown in Figure 2. This interfaces the core network 20 to external packet data networks such as the Internet 24, or an IMS (IP Multimedia Subsystem) network, and communicates with the S-GW 22 to receive packets on the uplink from the UEs. Each UE may be simultaneously connected to multiple P-GWs 23 for accessing multiple PDNs. Whilst the P-GW is a separate logical gateway from the S-GW it is possible for a single hardware unit to provide both functions.

Figure 2 shows a single S1 interface between the eNB 11 and the core network. In fact, however, there are two distinct interfaces: S1-C (also called S1-MME) for the control plane, and S1-U for the user plane. Likewise, communications over the X2 interface include both X2-C for signalling and X2-U for user data.

The concept of "bearers" is important for achieving quality-of-service (QoS) in a packet-based network such as LTE. In general, a "bearer" can be thought of as an information transmission path of defined capacity, delay and bit error rate, etc. so as to enable a given service to be provided. Various types or levels of bearer can be established; for example a radio bearer (in LTE) is a service provided by layer 2 for transfer of user data between the UE and eUTRAN.

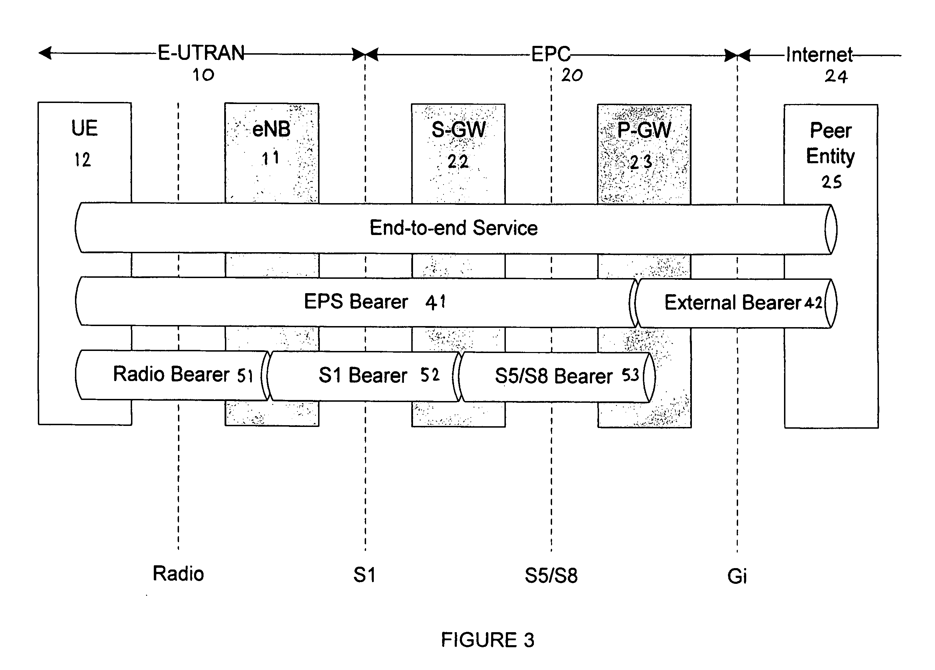

Figure 3 shows an EPS Bearer Service Architecture proposed for LTE. In Fig. 3, the vertical bars represent the main entities in the user plane, from the UE 12 to eNB 11 through to S-GW 22 and P-GW 23, terminating in a peer entity (such as an Internet web server 25) connected to the P-GW 23. To provide an end-to-end service between the UE 12 and Peer Entity 25 (as indicated by the upper horizontal band in the figure), the system sets up "bearers" as shown. An EPS Bearer 41 represents the entire connection within the LTE system; it constitutes a QoS flow for a particular service. The connection continues outside the LTE system via an External Bearer 42.

The EPS Bearer 41 is made up, in turn, of a radio bearer 51 between the UE 12 and eNB 11, and an S1 Bearer 52 between the eNB 11 and S-GW 22. A further Bearer (S5/S8 Bearer 53) is set up between the S-GW 22 and P-GW 23. Each Bearer can be regarded as a "tunnel" in a given protocol layer for transport of packets, connecting the end points for the duration of a particular service or "session", e.g. voice call or download. Thus, the radio bearer 51 transports the packets of the higher-layer EPS Bearer 41 between the UE 12 and eNB 11, and the S1 Bearer 52 transports the packets of the EPS Bearer 41 between the eNB 11 and S-GW 22. Bearer control, mentioned previously, includes the setting up of bearers for a particular session so as to ensure sufficient QoS, taking into account the resource situation in the E-UTRAN 10 and existing sessions already in progress. It also involves the modification and release of bearers.

Bearers are also defined in the signalling plane. As currently proposed, LTE employs the-known SCTP protocol for transmitting signalling messages between an eNB and MME, or between two eNBs. To be precise, SCTP is used as the transport layer of an S1 or X2 signalling bearer as the case may be. This requires a so-called SCTP association setup to be performed between the eNB and MME, or between the two eNBs.

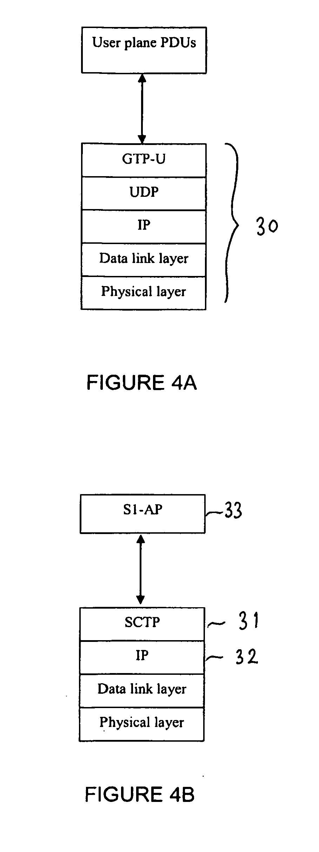

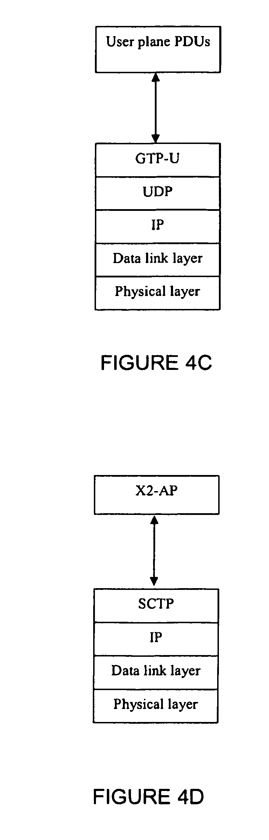

Here, "transport layer" refers to a layer in a protocol stack. Figures 4A to 4D show the protocol stack defined for each of the S1-U, S1-C, X2-U and X2-C interfaces. The S1-U protocol stack is denoted 30 in Figure 4A and as shown in Fig.s 4B and 4D, both control plane interfaces involve the use of SCTP 31 in the transport layer for reliable transmission of signalling packets. The S1-C interface (Fig. 4B) is of particular relevance to the invention to be described.

The above discussion has so far mentioned only the eNB 11, the equivalent of the base station in earlier wireless communication systems, and which can serve many UEs in a relatively wide-area cell ("macro cell"). However, part of the LTE project is focussed on the possibility of deploying base station nodes on a much smaller geographical scale for homes or small businesses, each serving only a few UEs. This is the Home eNode B or HeNB, which corresponds to the so-called "femtocell" of some other proposals. The basic idea of a HeNB or femtocell is to enable so-called "fixed-mobile convergence": a single handset (UE) would be capable of communicating with an eNB covering a macro cell whilst the user is out and about, and of switching to a HeNB once the user is within range of a home or office cell, without needing to duplicate hardware resources needed for systems of different types. Generally, the HeNB would define a small cell within a larger, overlaid macro cell, necessitating handover between a HeNB and the macro cell eNB as required to ensure a stronger signal to/from the UE, or merely to switch to a cheaper tariff. For example, use of the HeNB might be preferred when the user is within range of it, in order to reduce connection charges. In addition, the HeNB might be used to ensure that UEs can be reached in specific areas, such as underground or within the confines of a large building. Thus, although the HeNB cell would still be overlaid by the macro cell it could provide coverage for a "hole" in the macro cell. However, alongside the potential for HeNBs to improve coverage and capacity of an LTE network, there is also the possibility of mutual interference between a HeNB and a macro cell eNB.

Whilst the functionality of the HeNB has yet to be decided, it is expected that it will retain most or all of the capabilities of the eNB but on a smaller scale. It is expected that the S1 connections (both user plane and control plane) to each HeNB would be made via fixed broadband (e.g. cable or DSL), since this is usually already available in most homes, offices and shops. HeNBs might be unused for much of the time (unlike a macro cell eNB, which would be expected to remain active indefinitely) allowing them to be placed in an inactive or sleep mode.

By contrast with eNBs which would be the property of, and managed by, the LTE network operator, it is expected that users would buy their own HeNBs much like a Wi-Fi router today. This may significantly reduce the cost of implementing the LTE network. A large-scale LTE network could encompass thousands of macro eNBs collectively covering a wide geographical area. However, if the concept of the HeNB proves successful, there might be millions of them deployed within the same LTE network, though not all would be active simultaneously. This raises issues of, for example, how the MMEs are to manage such a large number of S1 connections with the HeNBs without multiplying the number of MMEs and/or their individual processing power. In addition, each eNB (henceforth called macro eNB, to distinguish it from the HeNB) may have to maintain a large number of X2 connections with HeNBs deployed within the macro cell it serves. Dynamic connectivity (switching connections off and on as and when appropriate) is one approach to limit the total number of connections to be managed at any one time. It may also help to reduce the risk of interference between HeNBs and an eNB of an overlaying macro cell.

It is therefore desirable to reduce the number of active connections in an LTE network; more particularly, it is desirable to limit the number of active S1 connections maintained by an MME with HeNBs.

TR R3.020: "Home(e)NodeB: Network Aspects (Release 8)"; 3GPP TR R3.020 V0.6.0; 05-2008; pages 1-53; XP002511864 discloses an access node and a wireless communication method according to the preamble of each independent claim. A network configuration corresponding to that of Figure 1 is disclosed, with a so-called "S1-flex" approach in which at least a macro eNB (but not necessarily a HeNB) may be connected to several MMEs in an MME pool.

According to a first aspect of the present invention, there is provided an access node for use in a cellular wireless communication system in which one or more user equipments UE are arranged to perform wireless communication including signalling and user data traffic with the access node, and the access node is arranged to manage signalling connections with the UEs and to conduct signalling via a signalling connection with a control entity, characterised by comprising: first timer means for detecting a cessation of signalling associated with one of the UEs and releasing a signalling connection with that UE upon expiry of a first time interval; and second timer means for detecting that the signalling connections with all of the UEs have been released and for releasing a signalling connection with the control entity upon expiry of a second time interval.

Preferably, the access node also includes setting means for setting the second time interval to different values at different times of the day. This setting means may be responsive to a setting instruction from the control entity.

A third timer means may be provided which causes the access node to enter a "sleep" mode after a third time interval, following expiry of the second time interval.

The signalling connection between the access node and UE may involve establishing a signalling bearer, in which case the first timer means is arranged to release the connection by a bearer release procedure.

In one embodiment, the signalling conducted with the control entity employs Stream Control Transport Protocol (SCTP) and the second timer means is arranged to shut down an SCTP Association established for said signalling.

In one possible form of the invention, the system is an LTE-based system and the connection with the control entity is an S1 connection. In this instance, preferably, the control entity is a Mobility Management Entity (MME) of the LTE-based system.

In a preferred form of the invention, the access node is a Home eNodeB of the LTE-based system.

According to a second aspect of the present invention, there is provided a wireless communication method in which one or more user equipments UE perform wireless communication including signalling and user data traffic with an access node, and the access node manages signalling connections with the UEs and conducts signalling via a signalling connection with a control entity, characterised by comprising steps of, in the access node: detecting a cessation of signalling associated with one of the UEs and releasing a signalling connection with that UE upon expiry of a first time interval; and detecting that the signalling connections with all of the UEs have been released and releasing a signalling connection with the control entity upon expiry of a second time interval.

Further aspects of the invention provide a wireless communication system which incorporates the above access node together with a plurality of UEs and an MME, as well as computer software for enabling a wireless access point to function as the above-defined access node.

Reference is made, by way of example only, to the accompanying drawings in which:
Figure 1 shows the overall architecture proposed for LTE;
Figure 2 shows the division of functions among eNB, MME, S-GW and P-GW in an LTE wireless communication system;
Figure 3 illustrates the concept of bearers in an LTE wireless communication system;
Figures 4A to 4D illustrate protocol stacks for, respectively, an S1 user plane, S1 control plane, X2 user plane and X2 control plane;
Figure 5 shows the use of level 1 and level 2 timers in an embodiment of the present invention;
Figure 6 shows an SAE Bearer Release procedure; and
Figure 7 shows an SCTP Association Shutdown procedure.

An embodiment of the present invention will now be described with reference to an LTE system by way of example.

As mentioned above, an S1 control plane interface (S1-MME) is defined between the eNB/HeNB and the MME, the control plane protocol stack of the S1 interface being as shown in Fig. 4B. The transport network layer is built on IP (Internet Protocol) transport 32, with SCTP 31 on top of IP. The application layer signalling protocol is referred to as S1-AP (S1 Application Protocol) 33. As one of the SAE (System Architecture Evolution) bearer management procedures, an SAE Bearer Release procedure has been defined to release already established SAE Bearers for improving resource efficiency.

As the transport layer protocol, SCTP provides reliable transport for S1-MME signalling messages. However, with its built-in heartbeat for reachability check, SCTP demands a certain memory usage and CPU time even without any S1-AP connections. Considering that each HeNB will only have a small number of users (for example, the occupants of a single household), and most of the time will remain idle, maintaining S1 connections including SCTP association(s) permanently will unnecessarily raise the burden on the MME and reduce the resource efficiency. Thus dynamic S1 connectivity is required in the LTE HeNB architecture.

Embodiments of the present invention provide a mechanism which monitors the inactivity level of an S1 connection by using two timers, a level 1 inactivity timer *T₁* and a level 2 inactivity timer *T₂*. The timer *T₁* is applied on a per-UE basis and the timer *T₂* is applied to the HeNB as a whole.

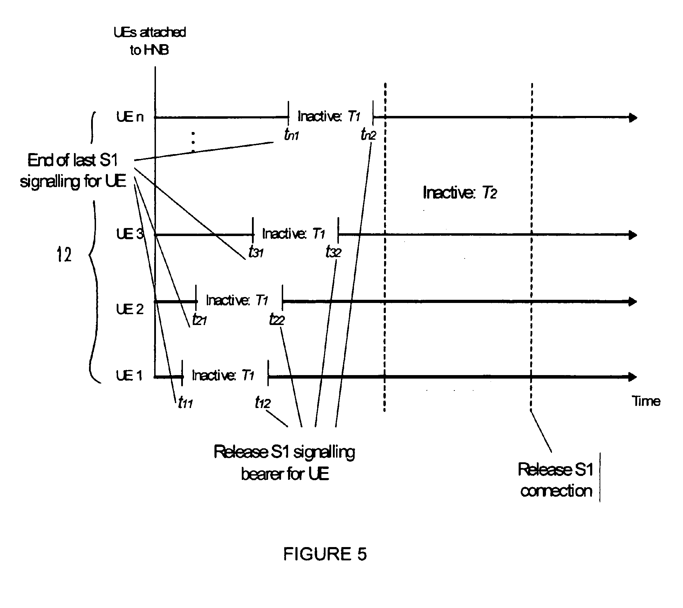

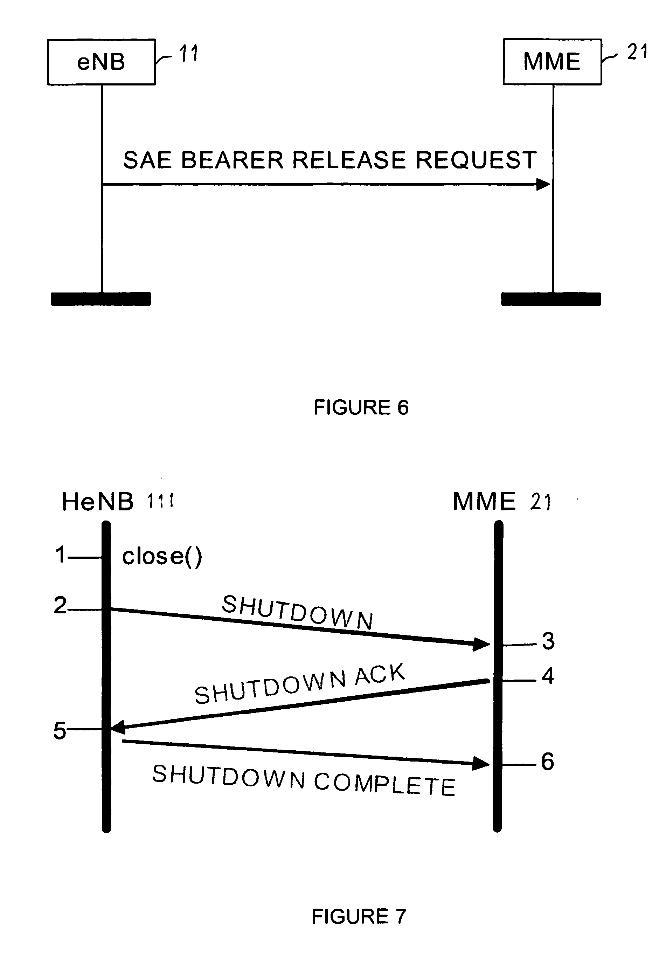

Fig. 5 shows the two-level inactivity timer mechanism. It is assumed there are *n* UEs 12 attached to a HeNB currently. Timer *T₁* starts when the S1 signalling message for an individual UE 12 ends, for example *t₁₁* for UE1. If this UE 12 remains inactive until *T₁* expires, for example *t₁₂* for UE1, the related S1 signalling bearer for this UE will be released through the *SAE Bearer Release* procedure; see Figure 6. Although Fig. 6 shows an eNB 11 as the requesting party, the procedure applies equally to an HeNB 11.

On the other hand, timer *T₁* will be reset (started again from zero) every time when any signalling is carried out with respect to this UE 12.

Level 2 timer *T₂* starts when all the S1 bearers for all the UEs 12 associated with a HeNB 111 have been released. This may be detected directly or indirectly; for example the number of instances if the level 1 timer having expired could be counted and compared with the number of UEs 12 attached to the HeNB 111. In any case, there will be a short time delay between the time of expiry of the final level 1 timer (tₙ₂ in the example shown in Fig. 5), and recognition of this fact by the HeNB.

Upon the expiry of *T₂* the SCTP association for the S1 connection of the HeNB 111 to the MME 21 will be shut down, in order to further reduce the maintenance cost. This is achieved using an already-proposed *SCTP Association Shutdown* procedure, as illustrated in Figure 7. On the other hand, if the HeNB 111 receives signalling information for any of its UEs before the expiry of *T₂*, the level 2 timer is reset and stopped until such time as all the attached UEs are again inactive.

As will be apparent, the timing diagrams of Figures 6 and 7 are sequential. Each expiry of the level 1 timer for an individual UE 12 prompts the HeNB 111 to send a bearer release request to the MME 21 according to Figure 6, and after n such requests, the HeNB 111 shuts down its overall connection with the MME 21 via the *SCTP Association Shutdown* of Figure 7.

The value of level 1 timer *T₁* is one of the system parameters and may be chosen by the network operator. As to the level 2 rimer *T₂*, the HeNB may decide its value based on the mobility and service pattern of the served UEs. That is, it is preferable to vary the duration of the level 2 timer, for example over the course of a day. On a working day, the busy time for a family owned HeNB is assumed to be during evening hours, when family users are at home making phone calls or using other services (e.g. IPTV or Internet services). During this busy time, *T₂* should be set to a big value which allows the S1 connection remain available for the services.

On the other hand, during the daytime of a working day, it is expected that there will be less usage of the HeNB and timer *T₂* should be short which will improve the resource efficiency and reduce the power consumption of the HeNB. One possible setting pattern for *T₂* is as shown in the following Table 1:

| **Time Zone** | | | **Usage Pattern** | | *T₂* |
|---|---|---|---|---|---|
| | | | | | |
| **#** | **Hours** | **Description** | **Service type** | **User type** | **value** |
| 1 | 06-08 | Morning rush hours | Occasion phone calls | Family users | long |
| 2 | 08-12 | Morning working hours | Rare | Other users | short |
| 3 | 12-14 | Day free hours | Rare | Other users | short |
| 4 | 14-18 | Afternoon working hours | Rare | Other users | short |
| 5 | 18-20 | Night rush hours | Phone calls | Family users | medium |
| 6 | 20-24 | Night free hours | Phones calls and other services | Family users | long |
| 7 | 24-06 | Sleep hours | Rare | Other users | short |

As the reference to a "working day" above indicates, it may be appropriate to set an alternative pattern for setting *T₂* over a weekend when typically more usage may be made of the HeNB.

Since a HeNB would normally be expected to know the absolute time (either from an internal clock, or from time information embedded in signalling from the MME), the HeNB itself can determine when and how to change the duration of the level 2 timer. If preferred, however, (perhaps to take account of public holidays or other exceptional situations), the network operator could supply the HeNB with the necessary setting via the MME.

The exact length of *T₂* in each case is not essential to the invention, and therefore is only indicated roughly by the terms "short", "medium" and "long" in the above Table. However, bearing in mind that to re-establish an S1 connection with the MME, including SCTP Association setup, can take several seconds (depending on Internet time delays), it is preferable to avoid shutting down the S1 connection on a timescale of less than a few minutes. Thus, for example, a "short" *T₂* might be 30 minutes and a "long" *T₂* an hour or more.

By contrast, the duration of *T₁* would normally remain fixed although if desired, this too could be varied either by internal settings within the HeNB or by instruction from the MME.

Thus, the present invention proposes a two-level inactivity timer mechanism, with which a Home eNodeB can not only release the inactive SAE bearer for a UE, but further release the inactive S1 connection including the SCTP association. In general, this mechanism improves the resource efficiency of the HeNBs and the related MMEs in terms of memory usage and CPU time consumption. It reduces the cost for the MMEs to maintain the SCTP associations towards numerous HeNBs, potentially allowing MMEs of a reduced hardware scale to be deployed, and/or fewer MMEs to serve the same geographical area. It also reduces the cost for the HeNBs to maintain the SCTP associations, which allows the further cost reduction of the HeNBs. In this way, Dynamic S1 connection facilitates the massive deployment of Home eNodeB without over-burdening the MMEs.

It also makes it possible for an inactive HeNB to fall back to a sleep mode, which may reduce the interference with an overlay macro eNodeB. Such a sleep mode could be governed by use of a third timer (not shown) having a longer duration than either *T₁* or *T₂*, so as to reduce power consumption of the HeNB during long periods of inactivity, such as overnight. That is, after expiry of the timer *T₂* and releasing the S1 connection to the MME, the HeNB could wait until the expiry of a longer time *T₃* to see whether any re-establishment of the S1 connection occurred and if not, enter the sleep mode.

To summarise, in an LTE network having a large number of Home eNodeBs, there is a problem of an MME having to maintain a large number of S1 connections to the Home eNodeBs. To mitigate this problem, a mechanism is provided to monitor the inactivity level of an S1 connection by using two timers, a level 1 inactivity timer *T₁* and a level 2 inactivity timer *T₂*. The timer *T₁* is applied on a per-UE basis and the timer *T₂* is applied to activity of the Home eNodeB as a whole. Timer *T₁* starts when the S1 signalling message for an individual UE ends. If this UE remains inactive until *T₁* expires, the related S1 signalling bearer for this UE is released via SAE Bearer Release. After all individual UEs have had their signalling bearers released in this way, then upon expiry of the further time interval *T₂*, the S1 connection from the Home eNodeB to the MME is released via SCTP Association Shutdown. By varying the duration of *T₂* according to the time of day, the Home eNodeB can remain suitably responsive during times of higher demand whilst minimising resource usage at idle times.

Although described with reference to an LTE system having Home eNodeBs, the present invention is not limited to such use and can be applied to any wireless communication system whose access nodes may advantageously have dynamic connections with each other and/or with a control entity of the system.

The invention also provides a computer program or a computer program product for carrying out the method described above, and a computer readable medium having stored thereon a program for carrying out the method. A computer program embodying the invention may be stored on a computer-readable medium, or it could, for example, be in the form of a signal such as a downloadable data signal provided from an Internet website, or it could be in any other form.

## Claims

1. An access node (11) for use in a cellular wireless communication system in which one or more user equipments UE (UE 1, UE 2, ... UE n) are arranged to perform wireless communication including signalling and user data traffic with the access node, and the access node is arranged to manage signalling connections with the UEs and to conduct signalling via a signalling connection with a control entity (21), **characterised by** comprising:
first timer means for detecting a cessation of signalling associated with one of the UEs and releasing a signalling connection with that UE upon expiry of a first time interval; and
second timer means for detecting that the signalling connections with all of the UEs have been released and for releasing a signalling connection with the control entity upon expiry of a second time interval.

2. The access node (11) according to claim 1 further comprising setting means for setting the second time interval to different values at different times of the day.

3. The access node (11) according to claim 2 wherein the setting means is responsive to a setting instruction from the control entity.

4. The access node (11) according to claim 1, 2 or 3 further comprising third timer means arranged to cause the access node to enter a sleep mode upon expiry of a third time interval following said second time interval.

5. The access node (11) according to claim 1 wherein the signalling connection has a signalling bearer and the first timer means is arranged to release the connection by a bearer release procedure.

6. The access node (11) according to any preceding claim wherein the signalling conducted with the control entity employs Stream Control Transport Protocol, SCTP, and the second timer means is arranged to shut down an SCTP Association established for said signalling.

7. The access node (11) according to any preceding claim wherein the system is an LTE-based system and the connection with the control entity (21) is an S1 connection.

8. The access node according to claim 7 wherein the control entity (21) is a Mobility Management Entity, MME, of the LTE-based system.

9. The access node according to claim 7 or 8 wherein the access node (11) is a Home eNodeB of the LTE-based system.

10. A wireless communication method in which one or more user equipments UE (UE 1, UE 2, ... UE n) perform wireless communication including signalling and user data traffic with an access node (11), and the access node manages signalling connections with the UEs and conducts signalling via a signalling connection with a control entity (21), **characterised by** comprising steps of, in the access node:
detecting a cessation of signalling associated with one of the UEs and releasing a signalling connection with that UE upon expiry of a first time interval; and
detecting that the signalling connections with all of the UEs have been released and releasing a signalling connection with the control entity upon expiry of a second time interval.

11. A wireless communication system comprising a plurality of user equipments, UEs, (UE 1, UE 2, ... UE n), a control entity (21) and an access point device linked to the control entity and in wireless communication with one or more of the UEs, wherein
the access point device is the access node (11) of any of claims 1 to 9,
and wherein the control entity is the Mobility Management Entity, MME.

12. Computer software comprising code means which, when executed by a processor of an access point device in a wireless communication system carry out the steps of the method of claim 10.

## Patentansprüche

1. Zugangsknoten (11) zur Verwendung in einem drahtlosen zellularen Kommunikationssystem, in dem eines oder mehrere Nutzergeräte UE (UE 1, UE 2, ... UE n) angeordnet sind, um eine drahtlose Kommunikation einschließlich Signalisierung und Nutzerdatenverkehr mit dem Zugangsknoten auszuführen, und der Zugangsknoten angeordnet ist, um Signalisierungsverbindungen mit den UEs zu verwalten und die Signalisierung über eine Signalisierungsverbindung mit einer Steuereinheit (21) durchzuführen, **dadurch gekennzeichnet, dass** er umfasst:
ein erstes Zeitgebermittel zum Detektieren eines Endes der Signalisierung, die einem der UEs zugeordnet ist, und Auslösen einer Signalisierungsverbindung mit jenem UE nach Ablauf eines ersten Zeitintervalls; und
ein zweites Zeitgebermittel zum Detektieren, dass die Signalisierungsverbindungen mit allen UEs ausgelöst worden sind, und zum Auslösen einer Signalisierungsverbindung mit der Steuereinheit nach Ablauf eines zweiten Zeitintervalls.

2. Zugangsknoten (11) nach Anspruch 1, ferner mit einem Einstellmittel zum Einstellen des zweiten Zeitintervalls auf verschiedene Werte zu verschiedenen Tageszeiten.

3. Zugangsknoten (11) nach Anspruch 2, bei dem das Einstellmittel auf eine Einstellinstruktion von der Steuereinheit reagiert.

4. Zugangsknoten (11) nach Anspruch 1, 2 oder 3, ferner mit einem dritten Zeitgebermittel, das angeordnet ist, um zu bewirken, dass der Zugangsknoten nach Ablauf eines dritten Zeitintervalls, das sich an das zweite Zeitintervall anschließt, in einen Schlafmodus eintritt.

5. Zugangsknoten (11) nach Anspruch 1, bei dem die Signalisierungsverbindung einen Signalisierungsträger hat und das erste Zeitgebermittel angeordnet ist, um die Verbindung durch eine Trägerauslösungsprozedur auszulösen.

6. Zugangsknoten (11) nach einem vorhergehenden Anspruch, bei dem für die Signalisierung, die mit der Steuereinheit durchgeführt wird, das Stream Control Transport Protocol (SCTP) genutzt wird und das zweite Zeitgebermittel angeordnet ist, um eine für die Signalisierung eingerichtete SCTP-Zuordnung abzuschalten.

7. Zugangsknoten (11) nach einem vorhergehenden Anspruch, bei dem das System ein System auf LTE-Basis ist und die Verbindung mit der Steuereinheit (21) eine S1-Verbindung ist.

8. Zugangsknoten nach Anspruch 7, bei dem die Steuereinheit (21) eine Mobility Management Entity (MME) des Systems auf LTE-Basis ist.

9. Zugangsknoten nach Anspruch 7 oder 8, bei dem der Zugangsknoten (11) ein Home eNodeB des Systems auf LTE-Basis ist.

10. Drahtloses Kommunikationsverfahren, bei dem eines oder mehrere Nutzergeräte UE (UE 1, UE 2, ... UE n) eine drahtlose Kommunikation einschließlich Signalisierung und Nutzerdatenverkehr mit einem Zugangsknoten (11) ausführen und der Zugangsknoten Signalisierungsverbindungen mit den UEs verwaltet und die Signalisierung über eine signalisierungsverbindung mit einer Steuereinheit (21) durchführt, **dadurch gekennzeichnet, dass** es im Zugangsknoten die Schritte umfasst:
Detektieren eines Endes der Signalisierung, die einem der UEs zugeordnet ist, und Auslösen einer Signalisierungsverbindung mit jenem UE nach Ablauf eines ersten Zeitintervalls; und
Detektieren, dass die Signalisierungsverbindungen mit allen UEs ausgelöst worden sind, und Auslösen einer Signalisierungsverbindung mit der Steuereinheit nach Ablauf eines zweiten Zeitintervalls.

11. Drahtloses Kommunikationssystem mit einer Vielzahl von Nutzergeräten UE (UE 1, UE 2, ... UE n), einer Steuereinheit (21) und einer Zugangspunktvorrichtung, die mit der Steuereinheit verknüpft ist und mit einem oder mehreren der UEs drahtlos kommuniziert, bei dem
die Zugangspunktvorrichtung der Zugangsknoten (11) nach einem der Ansprüche 1 bis 9 ist und die Steuereinheit die Mobility Management Entity MME ist.

12. Computer-Software, die ein Codemittel umfasst und dann, wenn sie durch einen Prozessor einer Zugangspunktvorrichtung in einem drahtlosen Kommunikationssystem verarbeitet wird, die Schritte des Verfahrens nach Anspruch 10 ausführt.

## Revendications

1. Noeud d'accès (11) à utiliser dans un système de communication sans fil cellulaire dans lequel un ou plusieurs équipements utilisateurs UE (UE 1, UE 2, ..., UE n) sont conçus pour réaliser avec le noeud d'accès une communication sans fil comprenant de la signalisation et du trafic de données utilisateurs, et le noeud d'accès est conçu pour gérer des connexions de signalisation avec les UE et pour conduire une signalisation via une connexion de signalisation avec une entité de commande (21), **caractérisé en ce qu'**il comprend :
un premier moyen temporisateur pour détecter une cessation de signalisation associée à l'un des UE et libérer une connexion de signalisation avec cet UE à l'expiration d'un premier intervalle de temps ; et
un deuxième moyen temporisateur pour détecter que les connexions de signalisation avec tous les UE ont été libérées et pour libérer une connexion de signalisation avec l'entité de commande à l'expiration d'un deuxième intervalle de temps.

2. Noeud d'accès (11) selon la revendication 1, comprenant en outre un moyen de réglage pour régler le deuxième intervalle de temps à des valeurs différentes à des heures différentes de la journée.

3. Noeud d'accès (11) selon la revendication 2, dans lequel le moyen de réglage répond à une instruction de réglage provenant de l'entité de commande.

4. Noeud d'accès (11) selon la revendication 1, 2 ou 3, comprenant en outre un troisième moyen temporisateur conçus pour faire passer le noeud d'accès dans un mode veille à l'expiration d'un troisième intervalle de temps suivant ledit deuxième intervalle de temps.

5. Noeud d'accès (11) selon la revendication 1, dans lequel la connexion de signalisation a une porteuse de signalisation et le premier moyen temporisateur est conçu pour libérer la connexion par une procédure de libération de porteuse.

6. Noeud d'accès (11) selon l'une quelconque des revendications précédentes, dans lequel la signalisation conduite avec l'entité de commande utilise un Protocole de Transport à Commande de Flux, SCTP, et le deuxième moyen temporisateur est conçu pour couper une association SCTP établie pour ladite signalisation.

7. Noeud d'accès (11) selon l'une quelconque des revendications précédentes, dans lequel le système est un système à base de LTE et la connexion avec l'entité de commande (21) est une connexion S1.

8. Noeud d'accès (11) selon la revendication 7, dans lequel l'entité de commande (21) est une Entité de Gestion de Mobilité, MME, du système à base de LTE.

9. Noeud d'accès selon la revendication 7 ou 8, dans lequel le noeud d'accès (11) est un eNoeudB de Rattachement du système à base de LTE.

10. Procédé de communication sans fil dans lequel un ou plusieurs équipements utilisateurs UE (UE 1, UE 2, ..., UE n) réalisent avec un noeud d'accès (11) une communication sans fil comprenant de la signalisation et du trafic de données utilisateurs, et le noeud d'accès gère des connexions de signalisation avec les UE et conduit une signalisation via une connexion de signalisation avec une entité de commande (21), **caractérisé en ce qu'**il comprend les étapes consistant, dans le noeud d'accès, à :
détecter une cessation de signalisation associée à l'un des UE et libérer une connexion de signalisation avec cet UE à l'expiration d'un premier intervalle de temps ; et
détecter que les connexions de signalisation avec tous les UE ont été libérées et libérer une connexion de signalisation avec l'entité de commande à l'expiration d'un deuxième intervalle de temps.

11. Système de communication sans fil comprenant une pluralité d'équipements utilisateurs (UE 1, UE 2, ..., UE n), une entité de commande (21) et un dispositif point d'accès replié à l'entité de commande et en communication sans fil avec un ou plusieurs des UE, où :
le dispositif point d'accès est le noeud d'accès (11) selon l'une quelconque des revendications 1 à 9,
et l'entité de commande est une Entité de Gestion de Mobilité, MME.

12. Logiciel informatique comprenant des moyens de code qui, lorsqu'ils sont exécutés par un processeur d'un dispositif point d'accès dans un système de communication sans fil, exécutent les étapes du procédé selon la revendication 10.
